# DEMANDE DE BREVET EUROPEEN

(11) **EP 0 557 161 A1**
(43) Date de publication de la demande: **25.08.1993**
(21) Numéro de dépôt: 93400328.6
(22) Date de dépôt: 09.02.1993
(51) Int. Cl.: H04N 9/12

(54) **Ecran matriciel, notamment de grandes dimensions, et procédé pour la réalisation d'un tel écran matriciel**

(30) Priorité: 18.02.1992 FR 9201810
(71) Demandeur: THOMSON TUBES ELECTRONIQUES, F-78140 Vélizy (FR)
(72) Inventeur: Spinnler, Vincent, F-92402 Courbevoie Cedex (FR); Arques, Marc, F-92402 Courbevoie Cedex (FR)
(74) Mandataire: Guérin, Michel

(57) **Abrégé**

L'invention concerne les écrans détecteurs ou de visualisation de type matriciel, formé par l'assemblage de plusieurs écrans élémentaires.

L'écran matriciel de l'invention comporte plusieurs écrans élémentaires (E1 à E4) raboutés par un de leurs côtés (10,11). Suivant une caractéristique de l'invention, chaque écran élémentaire (E1 à E4) comporte un dispositif de butée mécanique (B1 à B4) coopérant avec un dispositif de butée mécanique d'un écran élémentaire auquel il est rabouté, afin de réaliser le positionnement relatif entre ces écrans élémentaires.

Ces dispositions évitent des opérations d'alignement et d'indexation longues et difficiles lors de l'assemblage des écrans élémentaires (E1 à E4), opérations qui sont maintenant accomplies lors d'une découpe des écrans élémentaires qui elle-même impose déjà d'utiliser de moyens d'alignement et d'indexation précis.

## Description

L'invention concerne les écrans matriciels du type formé par l'assemblage de plusieurs écrans élémentaires, chaque écran élémentaire comportant un arrangement matriciel d'éléments actifs ou pixels. Elle concerne particulièrement des moyens pour faciliter et simplifier l'alignement des pixels ainsi que le raboutage des écrans élémentaires.

Les arrangements matriciels sont d'un usage courant dans les écrans de détection de divers rayonnements, aussi bien que dans les écrans de visualisation du type écrans plats.

La fabrication en relativement grandes dimensions de certains de ces écrans matriciels pose d'importants problèmes, au point qu'ils sont souvent réalisés par l'assemblage de plusieurs circuits ou écrans élémentaires. On rencontre de tels cas notamment dans le domaine des détecteurs d'image du type à transfert de charges (ou C.C.D de l'anglais "Charges Coupled Device"), domaine où l'on réalise des écrans détecteurs formés chacun de plusieurs écrans détecteurs élémentaires ayant environ 1,5 mm de côté.

Le procédé habituellement utilisé pour réaliser un écran matriciel à l'aide de plusieurs écrans plus petits appelés écrans élémentaires, ainsi que ci-dessus expliqué, consiste dans un premier temps à découper chaque écran élémentaire au plus près de la zone active où sont disposés les éléments actifs ou pixels. En effet, pour chaque circuit élémentaire, la dimension de la zone non active restante doit être assez. faible pour ne pas augmenter l'espacement entre deux lignes ou colonnes de pixels appartenant à des écrans élémentaires raboutés, par rapport aux lignes et colonnes formées dans un même écran élémentaire. Cette découpe à proximité de la zone active exige une opération d'alignement très précise, et donc longue et délicate.

La phase suivante consiste à indexer les écrans élémentaires entre eux, de manière à faire correspondre les lignes et les colonnes de pixels entre chaque écran élémentaire (avec les précisions d'alignement requises), afin de permettre la détection ou la visualisation d'une image géométriquement définie. Ceci constitue une autre opération d'alignement délicate qui exige la mise en oeuvre d'outils complexes.

En matière de découpe trois procédés sont couramment utilisés qui sont : la découpe par lame diamantée ; le clivage du substrat ; la découpe par gravure chimique.

Plusieurs inconvénients sont en général associés à la découpe par scie rotative à lame diamantée :
- une perturbation des propriétés des matériaux à proximité du trait de découpe du fait de l'échauffement et des contraintes mécaniques, ce qui a pour conséquence de dégrader les caractéristiques électriques des circuits actifs, et impose une zone non active de largeur au moins égale à la distance d'inocuité de la découpe ;
- un écaillage du substrat le long du trait de coupe, dont il faut tenir compte dans le dimensionnement de la zone inactive entre bord de découpe et bord de zone active ;
- un risque de pollution de la surface sensible (poussière de coupe, fluide de refroidissement,...) ;
- la précision requise nécessite une maîtrise parfaite du procédé de découpe et un équipement fiable et reproductible (spécifications à la limite de l'état de l'art).

En ce qui concerne le clivage du circuit ou substrat, cette méthode ne peut être utilisée que sur des circuits réalisés sur substrats monocristallins dont l'orientation a été choisie pour permettre le clivage, parallèlement aux directions de la matrice. Cette technologie est restrictive tant au niveau des substrats, donc des types d'écrans, que des procédés de réalisation des matrices (orientation des motifs par rapport aux directions cristallines).

Enfin la gravure chimique est une méthode relativement lente, peu compatible avec des exigences industrielles.

L'alignement des motifs c'est-à-dire des pixels des différents écrans élémentaires, est généralement effectué par visée optique Cette méthode impose l'utilisation d'un équipement spécifique permettant le déplacement relatif des circuits. Ces déplacements ont nécessairement une précision suivant les trois axes (X, Y,Z), compatible avec la taille des motifs à aligner (soit par exemple une précision < 10 µm pour des motifs de 100 µm).

L'indexation doit ensuite être conservée jusqu'à la fixation des écrans élémentaires sur un support (par exemple par collage). Ceci impose une fonction supplémentaire à l'équipement d'indexation.

Cette méthode s'applique sans difficulté majeure sur les écrans élémentaires de petite dimension (< 20 mm) mais devient très lourde pour des écrans de plusieurs dizaines de mm de côté.

Ainsi par exemple, cette méthode est pratiquement inapplicable pour réaliser des panneaux de grandes dimensions (par exemple 40 cm X 40 cm) pour la détection du rayonnement X, par exemple pour le radiodiagnostic.

En prenant pour exemple le cas de ces panneaux de détection du rayonnement X, ils sont conçus généralement à partir d'un substrat isolant, notamment en verre, sur lequel est réalisé un réseau matriciel d'éléments photosensibles, en silicium amorphe, des photodiodes par exemple, par la technique des films en couche mince.

Les éléments photosensibles forment un réseau matriciel, exposé à la lumière provenant d'un écran scintillateur convertissant le rayonnement X en lumière. Les lignes et les colonnes de ce réseau matriciel sont par exemple au pas de 100 µm. Il est courant de fabriquer de tels panneaux de détection X formant des écrans matriciels, avec des dimensions de l'ordre de 200 X 200 mm.

Mais au-delà de ces dimensions, la fabrication de ces panneaux pose de sérieux problèmes, dus notamment à la fragilité du substrat si ce dernier est en verre. Il est donc très pénalisant de ne pas pouvoir facilement utiliser la technique d'assemblage d'écrans élémentaires telle que ci-dessus décrite, pour réaliser des panneaux de détection X de grandes dimensions en partant de plusieurs panneaux X de par exemple 200 mm X 200 mm, formant chacun un écran élémentaire et qui seraient raboutés par leurs côtés.

L'invention permet d'éviter les inconvénients ci-dessus cités liés à l'assemblage de plusieurs écrans élémentaires. Elle concerne les écrans à structure matricielle, de détection ou de visualisation, et elle s'applique avantageusement quelles que soient les dimensions de l'écran matriciel à réaliser.

Suivant l'invention, un écran matriciel formé à l'aide d'au moins deux écrans élémentaires comportant chacun un réseau matriciel d'éléments actifs ou pixels, les écrans élémentaires étant raboutés par un de leurs côtés, est caractérisé en ce que chaque écran élémentaire comporte un dispositif de butée mécanique coopérant avec un dispositif de butée mécanique de l'écran élémentaire auquel il est rabouté, afin de réaliser le positionnement relatif entre les écrans élémentaires.

L'invention concerne aussi un procédé d'assemblage d'écrans matriciels élémentaires, consistant à rabouter les écrans élémentaires par un de leur côtés, caractérisé en ce qu'il consiste, dans chacun des côtés à rabouter, à réaliser au moins une découpe, les formes des découpes étant complémentaires dans deux côtés à rabouter.

L'invention sera mieux comprise à la lecture de la description qui suit, faite en référence aux dessins annexés parmi lesquels :
- la figure 1 montre de manière schématiquement une forme de réalisation préférée d'un écran matriciel conforme à l'invention ;
- la figure 1a est une vue agrandie d'un encadré de la figure 1 ;
- les figures 2 et 3 montrent des formes de réalisation différentes d'un dispositif de butée montré à la figure 1 ;
- la figure 4 illustre une autre manière de rabouter des écrans élémentaires montrés à la figure 1 ;
- la figure 5 illustre schématiquement la mise en oeuvre d'un laser Excimère utilisé pour réaliser des découpes.

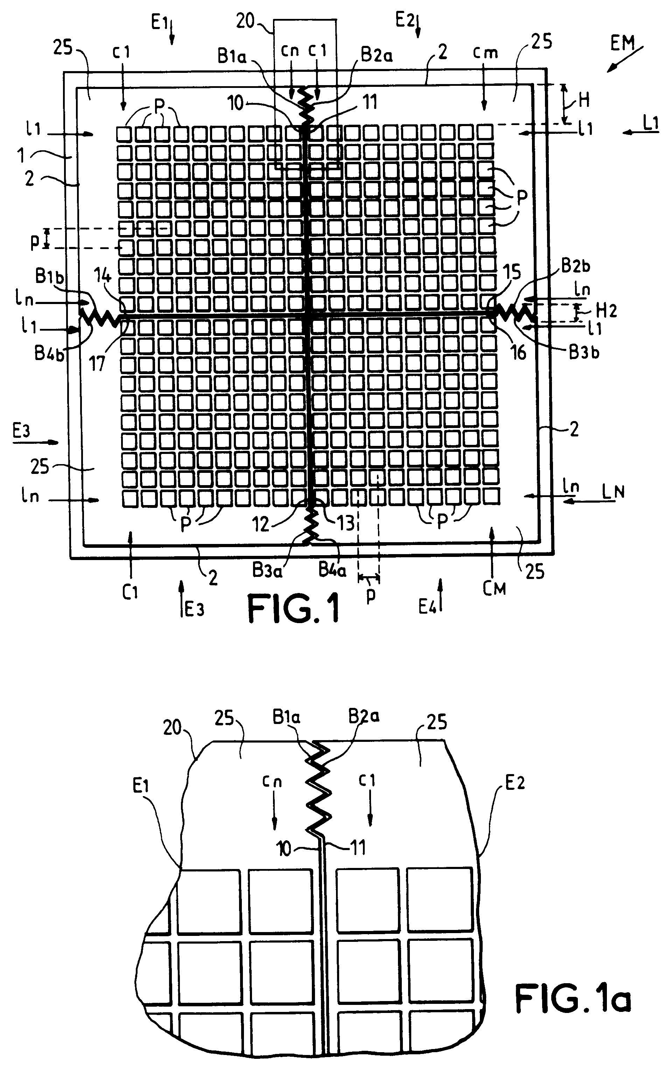

La figure 1 montre de manière schématique par une vue de dessus, un écran matriciel EM conforme à l'invention. L'écran matriciel EM est formé à l'aide de plusieurs écrans élémentaires E1, E2, E3, E4 assemblés ou raboutés les uns aux autres. A cet effet les écrans élémentaires E1 à E4 sont fixés par collage par exemple, sur une même plaque support 1.

Chaque écran élémentaire comporte un réseau matriciel d'éléments actifs ou pixels P disposés en lignes l1 à ln et en colonnes c1 à cm, suivant un même pas p (bien entendu les lignes et les colonnes peuvent avoir des pas différents). Les écrans élémentaires E1 à E4 sont fixés à la plaque support 1 de façon que les lignes l1 à ln du premier et du troisième écran élémentaire E1, E3 soient alignées respectivement avec les lignes du second et quatrième écran E2, E4, et que les colonnes c1, cm du premier et du second écran élémentaire E1, E2 soient alignées respectivement avec les colonnes des troisième et quatrième écrans élémentaires E3, E4.

Il en résulte que l'écran matriciel EM comporte N ligne L1 à LN et M colonnes C1 à CM de pixels, N étant égal à la somme des lignes des écrans élémentaires qui se succèdent suivant le sens des colonnes, et M étant égal à la somme des colonnes des écrans élémentaires qui se succèdent parallèlement au lignes.

Les écrans élémentaires E1 à E4 (et donc l'écran matriciel EM) peuvent être des écrans de visualisation ((par exemple écrans à cristaux liquides, panneaux à plasma etc..), ou des écrans détecteurs de rayonnement, par exemple sensibles aux infrarouges, à la lumière, ou au rayonnement X. Dans ces deux derniers cas, les capteurs élémentaires ou pixels P sont par exemple des diodes photosensibles, et dans le cas du rayonnement X un écran scintillateur (non représenté) est interposé entre la source de rayonnement et les pixels.

En supposant que l'écran matriciel EM soit destiné à capter une image lumineuse après conversion des photon X, chaque écran élémentaire E1 à E4 peut être réalisé sur un substrat 2 en silicium ou suivant le cas le plus courant, sur un substrat en verre, portant une matrice de photodiodes réalisée par une technologie de silicium amorphe et de films en couches minces. Cette technologie permet de réaliser des panneaux détecteurs pouvant atteindre par exemple 20 cm X 20 cm de côté, avec des pixels P disposés suivant un pas p de l'ordre de 100 micromètres. Avec l'invention et malgré leurs dimensions déjà importantes, de tels panneaux détecteurs peuvent être utilisés pour constituer les écrans élémentaires E1 à E4.

Suivant une caractéristique de l'invention, chaque écran élémentaire E1 à E4 comporte au moins un dispositif de butée mécanique B1ₐ à B4ₐ et B1_{b} à B4_{b} coopérant avec le dispositif de butée mécanique d'un autre écran élémentaire auquel il est rabouté, afin de définir le positionnement relatif entre les deux écrans raboutés.

Pour des écrans élémentaire E1 à E4 raboutés disposés dans le sens des colonnes C1 à CM, ce positionnement a pour effet d'aligner les colonnes de l'un sur les colonnes de l'autre, et pour des écrans élémentaires disposés suivant les lignes L1 à LN, ce positionnement a pour effet d'aligner les lignes des deux écrans élémentaires.

Les dispositifs de butée B1ₐ à B4ₐ et B1_{b} à B4_{b} constituent des références mécaniques, positionnées sur chaque écran élémentaire E1 à E4 par rapport à un ou plusieurs pixels P de cet écran, et aussi par rapport à la référence mécanique portée par l'autre écran élémentaire.

Dans l'exemple non limitatif décrit, les dispositifs de butée sont constitués par des découpes de formes complémentaires réalisées dans les côtés par lesquels les écrans élémentaires sont raboutés.

Le premier et le second écrans élémentaires E1, E2 étant raboutés l'un à l'autre, ils sont en contact par un de leurs côtés intérieurs 10,11 parallèle aux colonnes C1 à CM : le côté intérieur 10 du premier écran E1 porte un dispositif de butée fait par des découpes B1ₐ, dont la forme est complémentaire de découpes B2_{b} qui forment un dispositif de butée porté par le côté intérieur 11 du second écran élémentaire E2.

Le positionnement l'un par rapport à l'autre de ces deux écrans élémentaires, est obtenu pour l'encastrement des parties mâles et femelles de ces deux dispositifs de butée B1ₐ, B2ₐ.

La figure 1a est une vue agrandie d'un encadré 20 de la figure 1, encadré dans lequel le premier et le second écran élémentaires E1, E2 sont représentés partiellement. La figure 1a montre plus particulièrement les découpes de formes complémentaires, qui constituent les dispositifs de butée mécanique B1ₐ et B2ₐ formés sur les côtés intérieurs 10 et 11 de ces écrans élémentaires. Dans l'exemple non limitatif représenté, ces découpes ont une forme en dent de scie, mais tout autre forme réalisant au moins une partie rentrante par rapport à un côté intérieur et/ou au moins une partie en saillie par rapport à l'autre côté intérieur pourrait également convenir.

En référence à nouveau à la figure 1, on peut voir que le troisième et le quatrième écran élémentaire E3, E4 sont raboutés l'un à l'autre à l'aide de dispositifs de butée B3ₐ, B4ₐ, formés respectivement sur un côté intérieur 12 et un côté intérieur 13 parallèles aux colonnes C1 à CM, et appartement respectivement au troisième et au quatrième écran élémentaire E3,E4.

Les écrans élémentaires E1 à E4 comportent en outre des seconds dispositifs de butée B1_{b} à B4_{b}, formés sur des seconds côtés intérieurs 14, 15, 16, 17 parallèles aux lignes L1 à LN. Ces seconds dispositifs de butée sont constitués comme les premiers par des découpes, réalisées dans les seconds côtés intérieurs 14 à 17 et ayant des formes complémentaires pour deux côtés intérieurs en contact. L'encastrement des parties mâles et femelles réalise le positionnement des écrans élémentaires de façon que les colonnes des écrans E1, E2 soient alignées avec les colonnes respectivement des écrans E3, E4.

Les découpes qui constituent les dispositifs de butée mécanique sont réalisées sur les côtés intérieurs 10 à 17, dans une zone périphérique 25 de chaque écran élémentaire E1 à E4, zone qui ne comporte pas de pixels P et qui entoure ces derniers. En fait, avec la fabrication classique de panneaux détecteur tels que ceux à partir desquels sont constitués les écrans élémentaires E1 à E4, ces panneaux comportent une zone active contenant les pixels, et une zone périphérique ou zone inactive entourant cette zone active. La zone périphérique 25 peut avoir couramment une hauteur H de l'ordre de 20 mm quand le côté a environ 20 cm de long. Pour éviter de séparer par une distance trop importante deux lignes adjacentes L1 à LN ou deux colonnes adjacentes C1 à CM appartenant à deux écrans élémentaires E1 à E4 différents, cette hauteur H est très fortement réduite sur les côtés intérieurs 10 à 17 destinés à être raboutés.

En réalisant les dispositifs de butée dans une partie périphérique 25 restante de chaque écran élémentaire, on peut conférer aux découpes des dispositifs de butée B1ₐ à B4ₐ et B1_{b} à B4_{b}, une hauteur H2 éventuellement plus grande que la distance qui sépare deux colonnes ou deux lignes adjacentes et appartenant à des écrans élémentaires E1 à E4 différents. D'autre part, la répétition des motifs de ces découpes permet une redondance utile en cas de casse d'un partie mâle.

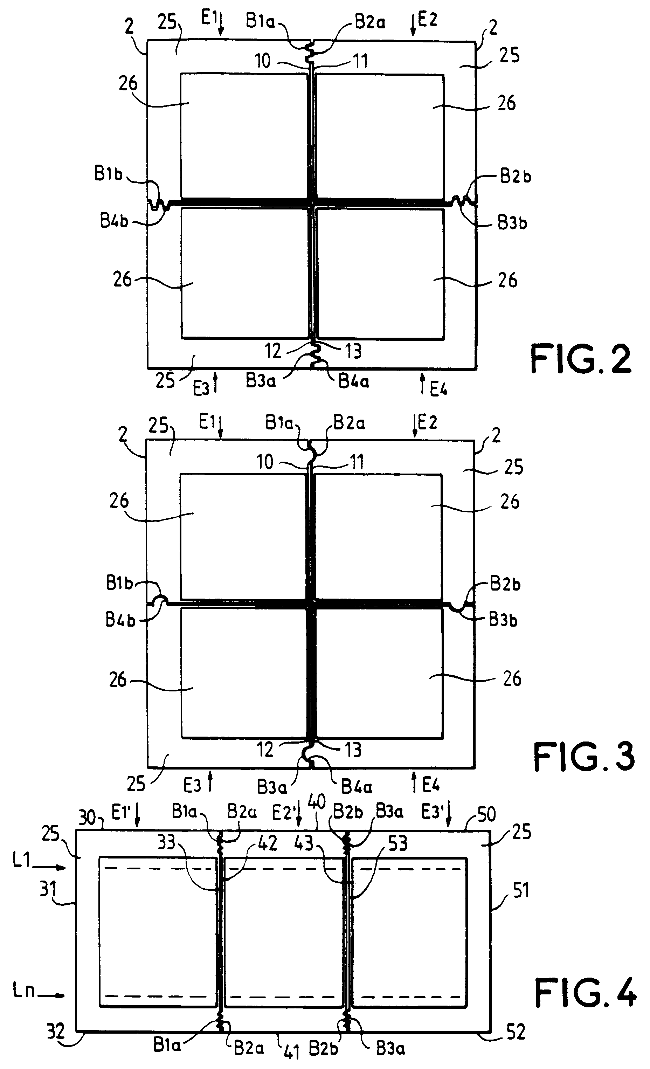

Dans l'exemple montré aux figures 1 et 1a, les découpes formant les dispositifs de butée ont une forme de rient de scie, mais plusieurs formes d'usinage de ces découpes sont possibles, en fonction du mode suivant lequel les écrans élémentaires E1 à E4 sont raboutés. Par exemple ces découpes peuvent avoir une forme de créneau comme représenté à la figure 2, ou encore une forme en arc de cercle comme représenté à la figure 3. (Pour simplifier les figures 2 et 3, les pixels ne sont pas représentés individuellement, mais sont symbolisés par une zone active 26).

La forme en créneau montrée à la figure 2 peut s'appliquer dans tous les cas, mais impose des jeux fonctionnels importants.

La forme en dent de scie montrée aux figures 1 et 1a est bien adaptée à un raboutage linéaire. La forme en arc de cercle montrée à la figure 3 est bien adaptée à un raboutage en matrice.

Il est à noter que dans l'exemple montré à la figure 1, l'assemblage des écrans élémentaires E1 à E4 peut s'effectuer en trois temps : par exemple dans un premier temps on assemble l'un à l'autre le premier et le second écran élémentaire E1, E2, pour former un premier sous-ensemble puis on raboute le troisième et le quatrième écran élémentaire E3, E4, pour former un second sous-ensemble ; enfin on raboute l'un à l'autre les deux sous-ensembles E1-E2 et E3-E4.

Pour que tous les dispositifs de butée B1 à B4 soient situés dans un zone périphérique 25 il faut que, suivant au moins un axe X ou Y c'est-à-dire parallèlement soit aux colonnes C1 à CM, soit aux lignes L1 à LN, au maximum deux écrans élémentaires soient raboutés ; mais ceci n'impose pas de limite au nombre d'écrans élémentaires raboutés suivant l'autre axe.

La figure 4 illustre un tel cas, dans lequel l'écran matriciel EM' a une forme rectangulaire, obtenue à l'aide de trois écrans élémentaires E1', E2', E3' raboutés les uns derrière les autres parallèlement aux lignes L1 à LN.(sur la figure 4, les lignes L1 et LN sont représentées par des lignes en traits pointillés, car les pixels ne sont pas représentés individuellement mais sont symbolisés par une zone active 26).

Dans cette configuration le premier écran alimentaire E1' conserve une partir périphérique 25 sur trois côtés extérieurs 30, 31, 32, et il porte deux dispositifs de butée B1ₐ formés à chaque extrémité d'un quatrième côté formant un côté intérieur 33, perpendiculaire aux lignes L1, Ln.

Le second écran élémentaire E2' conserve une zone périphérique 25 sur deux côtés opposés 40, 41 parallèles aux lignes L1 à Ln. Chacun des deux autres côtés intérieurs 42 et 43 orientés respectivement vers le premier et le troisième écran élémentaire E1', E3', portent un dispositif de butée B2ₐ et B2_{b} à chacune de leur extrémité.

Le troisième écran élémentaire E3' conserve une partie périphérique 25 sur trois côtés extérieurs 50, 51, 52, et il porte un dispositif de butée B3ₐ à chaque extrémité d'un côté intérieur 53.

Il est à noter que dans la configuration de la figure 4, le positionnement des écrans élémentaires E1', E2', E3' pourrait être obtenu aussi avec seulement un dispositif de butée par côté intérieur.

Les découpes qui constituent les dispositifs de butée B1 à B4 doivent être réalisées dans une gamme de précision compatible avec la précision de positionnement recherchée. A cette fin, différentes méthodes d'usinage peuvent être utilisées telles que par exemple celles utilisant des ultrasons. Ces dernières méthodes sont intéressantes du fait qu'elles permettent de traiter des matériaux fragiles, tels que le verre ou le silicium, cependant elles présentent l'inconvénient d'offrir une faible vitesse d'usinage.

L'invention propose plus particulièrement d'utiliser un laser du type Excimère pour découper les bords intérieurs des écrans élémentaires, et faire dans ces bords intérieurs les découpes qui constituent les dispositifs de butée B1 à B4. Le laser Excimère permet dans cette application, d'effectuer des usinages dans des temps compatibles avec les exigences industrielles, tout en exigeant des moyens relativement simples pour sa mise en oeuvre.

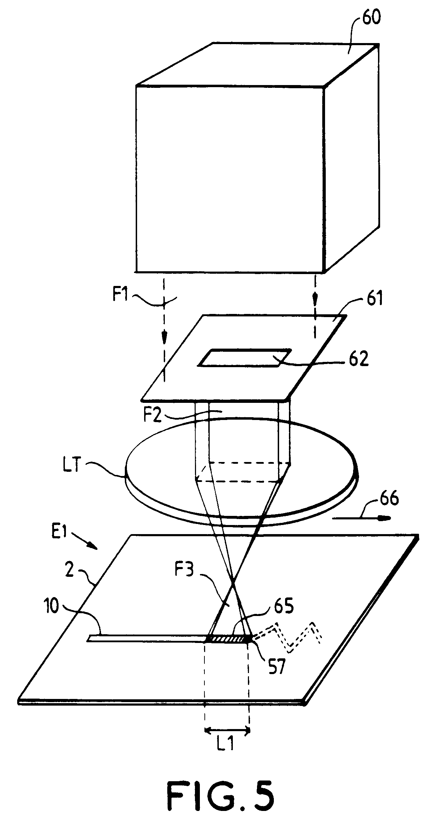

La figure 5 illustre de façon schématique l'utilisation d'un laser 60 notamment du type Excimère, pour découper un bord intérieur 10 d'un écran élémentaire E1 ; pour simplifier la figure 5 l'écran élémentaire E1 est représenté uniquement par son substrat 2 à partir duquel il est formé.

Le laser 60 délivre un faisceau F1 (symbolisé entre deux lignes en trait pointillés) de rayons parallèles. Le faisceau F1 passe par un masque 61 muni d'une ouverture 62 de forme rectangulaire définissant un faisceau F2 collimaté de section rectangulaire. Le faisceau collimaté F2 est ensuite focalisé par une lentille LT et constitue un faisceau F3 dit utile, projeté sur l'écran élémentaire E1.

Le faisceau utile F3 forme sur l'écran élémentaire une tache rectangulaire 65, tache qui correspond à la surface sur laquelle s'opère l'enlèvement de matière sous l'action du rayonnement laser. La tache 65 peut avoir par exemple une longueur L1 de l'ordre de 2 millimètres et une largeur de l'ordre de 200 micromètres. Le découpage en ligne droite d'un côté intérieur 10 est obtenu en déplaçant l'écran élémentaire E1 sous le faisceau utile F3, dans le sens montré par la flèche 66 par exemple.

En supposant que les découpes nécessaires à former un dispositif de butée B1ₐ aient une forme en dent de scie (représentée en traits pointillés sur la figure), la découpe en ligne droite peut être poursuivie jusqu'à l'extrémité 57 de cette ligne droite. Le changement de direction de la découpe s'effectue ensuite par une modification de l'orientation relative entre l'écran élémentaire E1 et l'ouverture rectangulaire 62 du masque 61, cette dernière devant être positionnée au-dessus de chacune des lignes brisées dont la succession constitue les dents de scie. Chaque ligne brisée peut avoir une longueur minimum égale à la longueur L1 de la tache 65, si le découpage de cette ligne brisée s'effectue sans déplacement de l'écran élémentaire E1 sous le faisceau utile F3. Bien entendu chaque ligne brisée exige une modification de l'orientation de la longueur L1 de la tache 65 et donc de l'ouverture 62 du masque 61, par rapport à l'écran élémentaire E1.

Ces différentes découpes sont positionnées par rapport à des références mécaniques qui existent sur tous les écrans élémentaires E1 à E4, par exemple la position d'une ligne de pixels donnée Ces indexations des découpes sont effectuées avec une précision égale à celle de l'équipement de découpe, précision qui peut facilement être meilleure que ± 10 miromètres. Bien entendu ces positionnements tiennent compte du fait que les découpes peuvent être alternativement rentrantes (partie femelle) et en saillie (partie mâle), et que les parties mâles situées du côté d'un écran élémentaire donné sont en regard des parties femelles situées du côté de l'écran élémentaire adjacent.

Ainsi avec l'invention, l'alignement ou indexation est opérée une seule fois au moment de la découpe, d'une manière simple, alors que dans l'art antérieur il est nécessaire d'opérer un premier alignement au moment de la découpe et un second alignement (particulièrement délicat) au moment de l'assemblage des écrans élémentaires.

## Revendications

1. Ecran matriciel comportant nu moins deux écrans élémentaires (E1 à E4) assemblés, chaque écran élémentaire comportant un réseau matriciel d'éléments actifs ou pixels (P), les écrans élémentaires (E1 à E4) étant raboutés par un de leurs côtés (10, 11), caractérisé en ce que chaque écran élémentaire (E1 à E4) comporte au moins un dispositif de butée mécanique (B1 à B4) coopérant avec un dispositif de butée mécanique d'un écran élémentaire auquel il est rabouté, afin de réaliser le positionnement relatif entre les écrans élémentaires (E1 à E4).

2. Ecran matriciel suivant la revendication 1, caractérisé en ce que au moins un écran élémentaire (E1 à E4) comporte deux dispositifs de butée mécaniques (B1 à B4) à l'aide desquels il est rabouté à deux autres écrans élémentaires.

3. Ecran matriciel suivant la revendication 1, caractérisé en ce que au moins un écran élémentaire (E1 à E4) comporte quatre dispositifs de butée mécanique (B1 à B4) à l'aide desquels il est rabouté à deux autres écrans élémentaires.

4. Ecran matriciel suivant l'une des revendications précédentes, caractérisé en ce que chaque dispositif de butée mécanique (B1 à B4) est réalisé sur un côté (10 à 13) destiné à être rabouté.

5. Ecran matriciel suivant l'une des revendications précédentes, caractérisé en ce que l'écran matriciel (EM) est un détecteur de rayonnement.

6. Ecran matriciel suivant la revendication 5, caractérisé en ce que le rayonnement est un rayonnement X.

7. Ecran matriciel suivant l'une des revendications précédentes, caractérisé en ce que les dispositifs de butée mécanique (B1à B4) sont formés par au moins une découpe rentrante et/ou en saillie par rapport à un côté (10 à 13) des écrans élémentaires (E1 à E4), les découpes ayant des formes complémentaires dans les deux dispositifs de butée (B1 à B4) formés sur deux côtés raboutés l'un à l'autre.

8. Ecran matriciel suivant la revendication 7, caractérisé en ce que les découpes sont réalisées dans une partie périphérique (25) des écrans élémentaires (E1 à E4) ne contenant pas de pixels (P).

9. Ecran matriciel suivant l'une des revendications précédentes, caractérisé en ce que pour deux écrans élémentaires (E1 à E4) raboutés l'un à l'autre, les dispositifs de butée mécanique (B1 à B4) correspondants sont disposés de manière à aligner des pixels (P) de l'un des écrans élémentaires avec des pixels de l'autre écran élémentaire.

10. Ecran matriciel suivant la revendication 7, caractérisé en ce que les découpes sont en forme de dent de scie.

11. Ecran matriciel suivant la revendication 7, caractérisé en ce que les découpes sont en forme de créneau.

12. Ecran matriciel suivant la revendication 7, caractérisé en ce que les découpes sont de forme circulaire.

13. Procédé d'assemblage d'au moins deux écrans élémentaires (E1 à E4) comportant chacun un réseau matriciel d'éléments actifs ou pixels (P), consistant à rabouter les écrans élémentaires (E1 à E4) par un de leurs côtés (10,13) de façon que des pixels (P) des deux écrans élémentaires soient alignés, caractérisé en ce qu'il consiste à réaliser au moins une découpe (B1 à B4) dans chaque côté (10 à 13) à rabouter, les découpes ayant des formes complémentaires pour cieux côtés raboutés l'un à l'autre.

14. Procédé d'assemblage suivant la revendication 13, caractérisé en ce que les découpes (B1 à B4) sont réalisées dans des parties périphériques (25) de chaque écran élémentaire (E1 à E4) vides de pixels (P).

15. Procédé d'assemblage suivant l'une des revendications 13 ou 14, caractérisé en ce que les découpes (B1 à B4) sont réalisées à l'aide d'un laser du type Excimère.
